(19) Europäisches Patentamt
European Patent Office
Office européen des brevets

(11) Publication number: 0 092 672
A2

(12) # EUROPEAN PATENT APPLICATION

(21) Application number: 83102703.2

(22) Date of filing: 18.03.83

(51) Int. Cl.$^3$: C 08 G 18/50
C 08 G 18/32, C 08 G 18/65
B 29 D 27/00

(30) Priority: 23.04.82 US 371377

(43) Date of publication of application:
02.11.83 Bulletin 83/44

(84) Designated Contracting States:
DE FR GB IT SE

(71) Applicant: TEXACO DEVELOPMENT CORPORATION
2000 Westchester Avenue
White Plains New York 10650(US)

(72) Inventor: Dominguez, Richard Joseph Gilbert
3107 Canter Lane
Austin Texas 78759(US)

(74) Representative: Burnside, Michael et al,
c/o Michael Burnside & Partners 2 Serjeants' Inn Fleet Street
London EC4Y 1HL(GB)

(54) **Polyurea-containing reaction injection molded elastomers.**

(57) The invention relates to reaction injection molded elastomers containing a minor amount of polyurea linkages derived from high molecular weight amine terminated polyethers, a hydroxyl terminated chain extender and a polyisocyanate. The reaction injection molded (RIM) elastomers of this invention are useful, for example, as automobile body parts.

EP 0 092 672 A2

Croydon Printing Company Ltd.

D.75,813-F
0092672

# POLYUREA-CONTAINING REACTION INJECTION MOLDED ELASTOMERS

This invention concerns the field of reaction injection molded elastomers.

United States Patents 4,254,069 and 4,272,618 concern the curing of RIM polyurethane elastomers. In the Glossary of these patents, a "polyol" is defined as a di- or greater functionality high molecular weight alcohol or an amine terminated molecule composed of ether groups. In the discussion of chain extenders in these patents, low molecular weight hydroxyl terminated molecules; e.g., ethylene glycol, are disclosed. However, the actual examples are of polyether polyurethanes using polyols (hydroxyl terminated) of high molecular weight. The chain extenders, ethylene glycol and monoethanolamine, were used as crosslinkers.

U. S. Patent 3,838,076 discloses foams made from amine terminated polyethers, wherein the amine termination ranges from 10 to 50 per cent.

U. S. Patent 4,246,363 claims a RIM polyurethane composition derived from using at least three different polyols having specific relationships and reactivity and solubility parameters to one another. Also, U. S. Patent 4,269,945 claims a process for preparing RIM polyurethanes wherein a relatively high molecular weight hydroxyl containing polyol, a chain extender and a polyisocyanate are used. The chain extender may be an aliphatic amine containing material having at least one primary amine group.

The invention is a reaction injection molded (RIM) elastomer comprising a cured reaction product of primary or secondary amine terminated polyethers of greater than 1,500 molecular weight having greater than 50% of their active hydrogens in the form of amine hydrogens, a hydroxyl containing chain extender and an aromatic polyisocyanate. The invention is also a method of preparation of a RIM elastomer as described above.

The amine terminated polyethers useful in this invention include primary and secondary amine terminated polyether polyols of greater than 1,500 average molecular weight having from 2 to 6 functionality, preferably from 2 to 3, and an amine equivalent weight from about 750 to about 4,000. Mixtures of amine terminated polyethers may be used. In a preferred embodiment the amine terminated polyethers have an average molecular weight of at least 2,500.

The amine terminated polyether resins useful in this invention are polyether resins made from an appropriate initiator to which lower alkylene oxides such as ethylene oxide, propylene oxide, butylene oxide or mixtures thereof are added with the resulting hydroxyl terminated polyol then being aminated. When two or more oxides are used, they may be present as random mixtures or as blocks of one or the other polyether. In the amination step it is highly desirable that the terminal hydroxyl groups in the polyol be essentially all secondary hydroxyl groups for ease of amination. Normally, the amination step does not completely replace all of the hydroxyl groups in the amine group.

However, the majority of hydroxyl groups are replaced by amine groups. Therefore, the amine terminated polyether resins useful in this invention have greater than 50 per cent of their active hydrogens in the form of amine hydrogens. If ethylene oxide is used it is desirable to cap the hydroxyl terminated polyol with a small amount of higher alkylene oxide to ensure that the terminal hydroxyl groups are essentially all secondary hydroxyl groups. The polyols so prepared are then reductively aminated as outlined in U. S. Patent 3,654,370, which is incorporated herein by reference.

In the practice of this invention, a single high molecular weight amine terminated polyether resin may be used. Also, mixtures of high molecular weight amine terminated polyols such as mixtures of di- and trifunctional materials and/or different molecular weight or different chemical composition materials may be used.

The chain extenders useful in this invention include low molecular weight linear diols such as 1,4-butane diol and ethylene glycol. Ethylene glycol is especially preferred. Other chain extenders, including cyclic diols such as 1,4-cyclohexane diol would also be suitable as chain extenders in the practice of this invention.

A wide variety of aromatic polyisocyanates may be used here. Typical aromatic polyisocyanates include p-phenylene diisocyanate, polymethylene polyphenylisocyanate, 2,6-toluene diisocyanate, dianisidine diisocyanate, bitolylene diisocyanate, naphthalene-1,4-diisocyanate, bis(4-isocyanatophenyl)methane, bis(3-methyl-3-isocyantophenyl)methane, bis-(3-methyl-4-isocyanatophenyl)methane, and 4,4'-diphenylpropane diisocyanate.

Other aromatic polyisocyanates used in the practice of the invention are methylene-bridged polyphenyl polyisocyanate mixtures which have a functionality of from about 2 to about 4. These latter isocyanate compounds are generally produced by the phosgenation of corresponding methylene-bridged polyphenyl polyamines, which are conventionally produced by the reaction of formaldehyde and primary aromatic amines, such as aniline, in the presence of hydrochloric acid and/or other acidic catalysts. Known processes for preparing polyamines and corresponding methylene-bridged polyphenyl polyisocyanates therefrom are described in the literature and in many patents, for example, U.S. Patents 2,683,730; 2,950,263; 3,012,008; 3,344,162 and 3,362,979.

Usually methylene-bridged polyphenyl polyisocyanate mixtures contain about 20 to about 100 weight percent methylene diphenyldiisocyanate isomers, with the remainder being polymethylene polyphenyl diisocyanates having higher functionalities and higher molecular weights. Typical of these are polyphenyl polyisocyanate mixtures containing about 20 to 100 weight percent methylene diphenyldiisocyanate isomers, of which 20 to about 95 weight percent thereof is the 4,4'-isomer with the remainder being polymethylene polyphenyl polyisocyanates of higher molecular weight and functionality that have an average functionality of from about 2.1 to about 3.5. These isocyanate mixtures are known, commercially available materials and can be prepared by the process described in U.S. Patent, 3,362,979, issued January 9, 1968 to Floyd E. Bentley.

By far the most preferred aromatic polyisocyanate

is methylene bis(4-phenylisocyanate) or MDI. Pure MDI, quasi- prepolymers of MDI, modified pure MDI, etc. Materials of this type may be used to prepare suitable RIM elastomers. Since pure MDI is a solid and, thus, often inconvenient to use, liquid products based on MDI are often used and are included in the scope of the terms MDI or methylene bis(4-phenylisocyanate) used herein. U.S. Patent 3,394,164 is an example of a liquid MDI product. More generally uretonimine modified pure MDI is included also. This product is made by heating pure distilled MDI in the presence of a catalyst. The liquid product is a mixture of pure MDI and modified MDI:

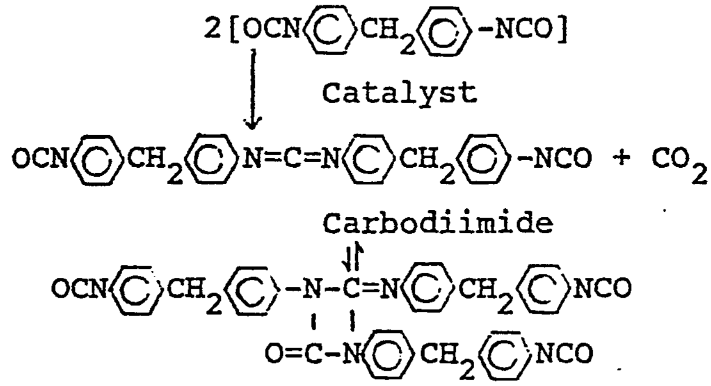


Carbodiimide

Uretonimine

Examples of commercial materials of this type are Upjohn's ISONATE® 125M (pure MDI) and ISONATE 143L ("liquid" MDI). Preferably the amount of isocyanates used is the stoichiometric amount based on all the ingredients in the formulation or greater than the stoichiometric amount.

Of course, the term polyisocyanate also includes quasi-prepolymers of polyisocyanates with active hydrogen containing materials.

Catalysts such as tertiary amines or an organic tin compound or other polyurethane catalysts are used. The organic tin compound may suitably be a stannous or stannic

compound, such as a stannous salt of a carboxylic acid, a trialkyltin oxide, a dialkyltin dihalide, a dialkyltin oxide, etc., wherein the organic groups of the organic portion of the tin compound are hydrocarbon groups containing from 1 to 8 carbon atoms. For example, dibutyltin dilaurate, dibutyltin diacetate, diethyltin diacetate, dihexyltin diacetate, di-2-ethylhexyltin oxide, dioctyltin dioxide, stannous octoate, stannous oleate, etc., or a mixture thereof, may be used.

Tertiary amine catalysts include trialkylamines (e.g., trimethylamine, triethylamine), heterocyclic amines, such as N-alkylmorpholines (e.g., N-methylmorpholine, N-ethylmorpholine, dimethyldiaminodiethylether, etc.), 1,4-dimethylpiperazine, triethylenediamine, etc., and aliphatic polyamines such as N,N,N'N'-tetramethyl-1,3-butanediamine.

Other conventional formulation ingredients may be employed as needed such as; for example, foam stabilizers, also known as silicone oils or emulsifiers. The foam stabilizers may be an organic silane or siloxane. For example, compounds may be used having the formula:

$$RSi[O-(R_2SiO)_n-(oxyalkylene)_mR]_3$$

wherein R is an alkyl group containing from 1 to 4 carbon atoms; n is an integer of from 4 to 8; m is an integer of from 20 to 40; and the oxyalkylene groups are derived from propylene oxide and ethylene oxide. See, for example, U.S. Patent 3,194,773.

Reinforcing materials, if desired, useful in the practice of our invention are known to those skilled in the art. For example, chopped or milled glass fibers, chopped or milled carbon fibers and/or other mineral fibers are useful.

Post curing of the elastomer of the invention is desirable. Post curing will improve some properties such as heat sag. Employment of post curing depends on the desired properties of the end product.

The examples which follow exemplify the improvement obtained by the process of this invention. However, these examples are not intended to limit the scope of the invention.

EXAMPLE 1

An elastomer was molded on a low pressure Admiral mechanical mixing machine. The following formulation was employed.

| B-Component | pbw |
|---|---|
| JEFFAMINE® D-2000 diamine | 16.0 |
| Ethylene glycol | 6.44 |
| L-5430 surfactant | 0.2 |
| THANCAT® DMDEE catalyst | 0.25 |
| FOMREZ® UL-29 | 0.025 |
| Dibutyltin dilaurate | 0.015 |
| **A-Component** | |
| ISONATE 143L | 30.37 |
| THANATE® quasi-prepolymer L-55-0 | 5.89 |

This elastomer is very tough. It has excellent strength properties as shown in Table I. It has poorer heat sag properties than usual. This problem is solved by using higher molecular weight JEFFAMINE products as will be shown later.

EXAMPLE 2

The identical formulation of Example 1 was molded in an Accuratio VR-100 high pressure impingement mixing machine. This was done since subsequent examples were molded using the Accuratio VR-100 machine. The properties are listed in Table I. The properties are superior to those of the elastomer of identical formulations molded on the low pressure Admiral machine - Example 1.

EXAMPLE 3

Comparison Example

In this example, the identical formulation of Example 2 was run except that THANOL® PPG-2000 diol was substituted for the JEFFAMINE D-2000 diamine of Example 2. This material has very poor properties as shown in Table I. In this example the soft segment, the hard segment, the proportion of soft segment to hard segment and the post treatment are identical yet the properties are much inferior to Example 2. This comparison shows how greatly amine termination of the polyether resin can improve properties over secondary hydroxyl termination.

EXAMPLE 4

In this example, the identical formulation of Example 2 was run except that a 2,100 molecular weight polybutylene oxide diamine was substituted for the JEFFAMINE D-2000 polyether diamine. This example extends the practice of this invention to butylene oxide polyether resins. The properties are good, especially the heat sag which is 1.8 cms compared to 3 cms for Example 2.

EXAMPLE 5

In this example, the identical formulation of Example 2 was molded except that the JEFFAMINE D-2000 polyether resin was substituted with a conventional RIM polyol, THANOL® SF-5505 polyol. This material had poorer strength properties (see Table I) compared to the material of Example 2. However, its heat sag properties were better.

EXAMPLE 6

A formulation similar to that of Example 2 except that the JEFFAMINE D-2000 polyether resin was substituted by a 5,000 molecular weight amine terminated polyether resin* with amine functionality of about 2.7 and no amine catalyst was used. This material was very tough and molded well. The heat sag of this material was better than the heat sag of the conventional system - Example 5. This example extends the practice of this invention to high molecular weight amine terminated polyether resins.

*This polyether resin was made using 5% ethylene oxide/95% propylene oxide mixed oxide and had greater than 90% amination of terminal secondary hydroxyl groups.

## TABLE I

## PROPERTIES AT 1.02 ISOCYANATE INDEX

| Material | Example 1 | Example 2 | Example 3 | Example 5 |
|---|---|---|---|---|
| Post Cure | 1/2 hour @ 162°C | 1/2 hour @ 162°C | 1/2 hour @ 162°C | 1/2 hour @ 162°C |
| Tensile, psi (bars) | 4740(326.9) | 4970(342.7) | 2580(177.8) | 4570(315) |
| Elongation, % | 120 | 175 | 40 | 130 |
| Tear, pli (Kg/cm) | 600(107) | 740(132) | 410(73) | 620(111) |
| Heat sag, cms, 1/2 hr @ 162°C 15.2 cms overhang | 2.3(5.9) | 1.2(3) | 1.9(4.8) | 0.7(1.8) |

## GLOSSARY OF TERMS AND MATERIALS

ISONATE® 143L - Carbodiimide modified liquid MDI, a product of the Upjohn Co.

JEFFAMINE® D-2000 - Polypropylene oxide diamine of about 2,000 molecular weight, over 90% amination.

THANOL® PPG-2000 - Polypropylene oxide diol of about 2,000 molecular weight.

THANOL® SF-5505 - A 5500 molecular weight polyether triol containing approximately 80% primary hydroxyl groups.

Quasi-Prepolymer L-55-0 - A quasi-prepolymer formed by reacting equal weight of ISONATE 143L and THANOL SF-5505.

L-543 Surfactant - A silicone glycol co-polymer surfactant containing reactive hydroxyl groups. A product of Union Carbide.

THANCAT® DMDEE - B,B-Dimorpholinodiethyl ether

FOMREZ® UL-29 - A stannic diester of a thiol acid. The exact composition is unknown. A product of Witco Chemical Co.

CLAIMS:

1. A reaction injection molded elastomer characterized in that it is made by reacting in a closed mold an amine terminated polyether of greater than 1,500 average molecular weight, having greater than 50% of their active hydrogens in the form of amine hydrogens, a hydroxyl terminated chain extender and a polyisocyanate.

2. An elastomer as claimed in claim 1, characterized in that the amine terminated polyethers have an average molecular weight of at least 2,500.

3. An elastomer as claimed in claim 1 or 2, characterized in that the amine terminated polyethers have a functionality ranging from about 2 to 6.

4. An elastomer as claimed in any preceding claim, characterized in that the amine terminated polyether is an aminated polyoxypropylene triol having an average molecular weight of about 5,000.

5. An elastomer as claimed in any preceding claim, characterized in that the chain extender is ethylene glycol.

6. An elastomer as claimed in any preceding claim, characterized in that the polyisocyanate is a quasi-prepolymer.

7. A method for making a reaction injection molded elastomer, characterized by reacting in a closed mold amine terminated polyethers greater than 1,500 average molecular weight, having greater than 50% of their active hydrogens in the form of amine hydrogens, a hydroxyl terminated chain extender and a polyisocyanate.

8. A method as claimed in Claim 7, characterized in that the amine terminated polyethers have an average molecular weight of at least 2,500.

9. A method as claimed in Claim 7 or 8, characterized in that the amine terminated polyethers have a functionality ranging from about 2 to 6.

10. A method as claimed in any of claims 7 to 9, characterized in that the amine terminated polyether is an aminated polyoxypropylene triol having an average molecular weight of about 5,000.

11. A method as claimed in any of Claims 7 to 9, characterized in that the chain extender is ethylene glycol.